# EUROPEAN PATENT APPLICATION

(11) **EP 4 663 488 A1**
(43) Date of publication of application: **17.12.2025**
(21) Application number: 24181858.2
(22) Date of filing: 13.06.2024
(51) Int. Cl.: B60S 1/04

(54) **REMOVABLE WINDOW WIPER UNIT**

(71) Applicant: Tigs Design & Engineering GmbH, 8311 Brütten (CH)
(72) Inventor: Bleischwitz, Robert, 8311 Brütten (CH)
(74) Representative: Kley Associés

(57) **Abstract**

A removable window wiper unit (27) is proposed which comes with a remote transmitter (5) and has a double and independent securing for attaching said window wiper unit (27) to any surface as eg a window (24). The features of this window wiper unit (27) comprise a wiper housing (4) containing
- an electronics compartment (11) with a micro-controller (102) for controlling a server motor (7),
- rechargeable (10) battery cells (6) for powering,
- means for removably attaching the window wiper unit (27) to a window (24). These means for attaching the window wiper (27) comprise
- a vacuum pad (1) being attached to the wiper housing (4) and a vacuum pump (3) providing a vacuum in a pad vacuum cavity (32) to secure the wiper housing (4) to the window (24)
and
- a permanent magnet (12) being fixed with the wiper housing (4) and on the other side of the surface (24) a counter-magnet unit (28) containing a counter magnet (14), resulting in both magnets getting attracted to each other towards the window (24).

## Description

The present invention relates to a window wiper unit according to claim 1.

Most cars are supplied with a built-in rear window wiper unit as a standard. Some coupes, roadsters, sedans, SUVs and in specific electric cars, as exemplary available at Genesis, Polestar, Always, Hyundai, BMW, Mercedes, BYD or Tesla, may come without a built-in rear window wiper unit. Possible reasons for the lack of a rear window wiper could originate from aesthetics, cost savings, limited backwards vision or airflow enforced cleaning thoughts.

Practical retrofit options of removable rear window wiper units seem not available on the market, even so the need of a wiped rear window of a car is found essential for passenger safety and natural back vision comfort. In specific at lower speeds and in urban surroundings, airflow enforced rain cleaning may often be insufficient and wiping a necessity.

Different types of removable window wiper units are known. GB 2 418 348 B [1] reveals for a front windscreen wiper arrangement that has failed, an emergency windscreen wiper apparatus. This emergency windscreen wiper apparatus comprises a body, suction means for attaching and securing the body to the outside of the road vehicle adjacent the front windscreen, a windscreen wiper unit and remote control means. Electrical power for the drive means may be provided by at least one battery which is in the housing. Due to a single vacuum pad attachment, in the event of a vacuum leak, the body with the windscreen wiper unit may fall from the car. The wiping sweep angle & motion is pre-defined by the usage of a continuous turning motor and a spindle.

US 4,316,303 [2] describes an auxiliary portable and removable windshield wiper unit for a motor vehicle, comprising an electrically driven motor oscillating a wiper blade and adapted to be mounted on the exterior of the motor vehicle body. This mounting can be realized with a pair of strong magnets engaged with a magnetic attracting material (e.g. mild steel) portion of the motor vehicle body proximate to a rear window with the wiper blade disposed. Electric power for the motor is supplied by an electric line. The availability of magnetic attracting car body material is the only means for attaching this portable and removable windshield wiper unit. This solution does neither attach to glass or plastic at windows or car roofs, nor on aluminum or carbon-fiber body-shells, since those are non-magnetic materials.

A special task is the attachment of a window wiper unit to a window. EP 2 480 430 B1 [3] describes a solution for attaching a pure mechanical carrier system for a vehicle with a plurality of vacuum devices mounted to said carrier system. Each of the vacuum devices has a pad shaped and sized to form a vacuum cavity on the cars body shell, a plunger attached to the pad and in fluid communication with the vacuum cavity, and an indicator positioned on the plunger to indicate the level of vacuum pressure within the vacuum cavity. Such a vacuum only based solution cannot be applied for a window wiper unit, especially under consideration of the dimensions of a window wiper unit and local contamination/pollution risk even with multiple independent suction pads.

In addition, existing wipers unit typically come with simple DC-motors and mechanical oscillators [1], which build large in size and lack easy adaptability of the wipe angle for various use-cases. In that perspective, a compact and removable window wiper unit is desired to cover a wider use case from diverse car body shells, boat windows up to aquariums.

Therefore, it is a goal of the present invention to provide a compact and removable window wiper unit that eliminates the previous described disadvantages, such as according to the teachings of the before mentioned documents lacking a double safety concept for the wiper attachment and limited body material attachment compatibility. In other words, the known solutions have a considerable risk in falling off the body shell, since they are based on a single physical safety principle. In addition, the invention aims a wiper unit fixation onto the body shell or window without cumbersome mechanical screwing or tethering.

This goal is reached by a removable window wiper specified with the features in claim 1.

The window wiper unit according to the present invention comprises a wiper housing containing
- a servo motor for driving a wiper arm,
- a control unit for controlling the servo motor,
- means for a removably attaching the window wiper unit to a window or a body shell, in the following window or a body shell are called surface,
   the window wiper unit being characterized in that the means for removably attaching the window wiper unit comprise for a double securing,
- a vacuum pad being attached to the wiper housing,
- a vacuum pump for providing a vacuum in a pad vacuum cavity of the wiper housing so that the wiper housing is fixed to the surface
   and
- a permanent magnet being fixed to the wiper housing and on the other side of the surface a counter-magnet is provided, resulting in the permanent magnet and the counter-magnet getting attracted to each other towards the surface.

The features of the invention as cited above enable the following advantages:
i) The operation of this proposed window wiper unit is working completely self-sufficient from the application case. There is neither an external electric power source or control cable, nor a mechanical screw on fixation needed to mount, power and control the window wiper unit on a car, boat or facility window car.
ii) The activation and operation of this proposed window wiper unit is simply conducted by a small and independent remote transmitter, which works user application independent.
iii) The installation of this proposed window wiper unit is extremely simple since it needs nothing else than its own components, consisting of the wiper housing and the counter magnetic unit. The remote transmitter unit can independently be positioned in a range of 10-20m from the windows wiper unit. The remote transmitter itself comes with a built-in magnet, allowing to attach itself to any magnetic surface, e.g. a loudspeaker steel grating within a car cabinet.
iv) A redundant, safe wiper unit fixation system is in place by making use of both vacuum and magnetic forces in parallel.

The field of application of this invention is not limited to retrofit a window wiper to rear windows of cars. The field of application is large and determined by a need of a clear vision through a window. For example, the invention can also be applied to boat windows, allowing to retrofit areas of wiping interest with detachable option. As this compact window wiper comes removable, it fits also well into the renting market with consumer-oriented customisation wishes, such as mobile homes or house boats. In addition, the window wiper unit can be used to clean inaccessible facility windows or camera lenses for outdoor observation needs via passing by maintenance personal. For the before used terms «window» and «body shell» the generic term «surface» is used in the claims.

The working principle of the invention will now be described more in detail with reference to following accompanying drawings. It is to be noted that the figures and the examples are only intended for illustrating the invention but not to restrict the invention thereto.
- FIG 1: top view of a window wiper unit with two additional sectional views A-A and B-B;
- FIG 2: perspective view of a window wiper unit, including a remote transmitter;
- FIG 3: bottom view of a part of the window wiper unit with one additional sectional view C-C;
- FIG 4: block diagram of the control unit.

This concrete embodiment refers to a window wiper unit 27 to be mounted on a window 24. Without any restriction the description is directly applicable also for a wiper unit 27 to be mounted on a body shell.

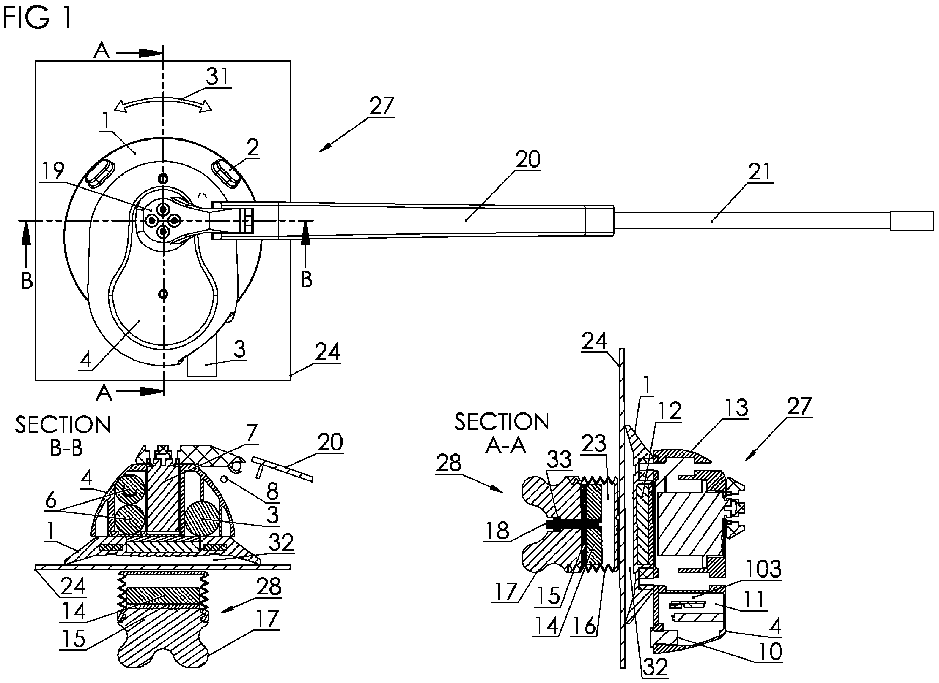

FIG 1 illustrates a window wiper unit 27 and comes with cross-section views, named section A-A and B-B. This window wiper unit 27 includes a wiper housing 4 in which there are
- a servo motor 7 for driving via a coupling 19 a spring loaded 8 wiper arm 20 and
- a control unit 103 arranged in an electronics compartment 11 of the wiper housing 4
   and
- a dual battery cells 6 for power autonomy and
- a vacuum hand pump 3 to allow vacuum generation in cavity 32 of the vacuum pad 1, which itself is hard mounted to the wiper housing 4.

The dual safety attachment design, featuring vacuum as well as magnetic attachment principles of the window wiper unit 27 towards the window 24, are described as follows in detail.
1) Adhesion via a vacuum cavity 32:
   With a hand actuated vacuum pump 3, a vacuum is generated within the pad vacuum cavity 32, resulting in strong adhesion forces of the vacuum sealed pad 1 towards the window 24. As the vacuum pad 1 comes mounted onto the vacuum housing 4, compression forces and rotational motions can be transferred via the wipe angle 31 from the servo motor 7, over the coupling 19 towards the wiper arm 20 and finally onto the window 24. Therefore, the vacuum pad 1 acts as compression and friction generating body. The reference numeral 3 stands on the one hand for the vacuum pump 3 itself and on the other hand for a push button 3 to operate said vacuum pump 3. The vacuum pump 3 itself is available on the market and described in detail eg via reference EP 2 480 430 B1 [3].
2) Adhesion via a permanent magnet 12 within the windows wiper unit 24 and a counter magnet unit 28:
   A permanent magnet 12 is located within the vacuum pad 1, which itself is fixed towards the wiper housing 4. On the opposite side of the window 24, a counter magnet unit 28 is placed while containing a counter-magnet 14. As a result, the permanent magnet 12 in the vacuum pad 1 and the counter-magnet 14 within the counter magnet unit 28 attract each other towards the window 24 and consequently attract the window wiper unit 27 towards window 24. The vacuum pad 1 itself acts in combination with the magnets 12 and 14 as friction generating system for the window 24 by providing magnetic compression forces.

The wiper housing 4 further contains parallel to the permanent magnet 12 a steel plate 13, which reduces electromagnetic interference with the servo motor 7 and increases the force attraction of the permanent magnet 12.

The counter magnet unit 28 comprises a counter magnet 14 and a steel plate 15, which acts attraction force increasing for the counter magnet 14 while reducing the magnetic field strength within the end-consumer handle 17. As shown in FIG 1 SECTION A-A, a screw 18 and nut 33 holds the handle 18, steel plate 15 and counter magnet 14 together. An air bumper cavity 23 is realized with a cylindrical rubber bellow 16, which compresses axially towards the window 24 to zero, if the counter magnet unit 28 is moved close to the window wiper unit 27. The vacuum release within air bumper cavity 23 happens within 1-3 seconds, allowing a smooth attraction of both magnets 12 and 14 onto the window 24.

The Mounting of the window wiper unit 27 is as follows:
In a first step, axial compression of the vacuum pad 1 is conducted via wiper housing 4 towards the window 24, allowing to close the pad vacuum cavity 32. The vacuum pump 3, an axial piston hand pump type, is used to extract air from cavity 32, resulting in adhesion and frictional forces between the vacuum pad 1 and window 24. Pumping is conducted until a colored safety mark disappears at the vacuum pump piston, reflecting visually sufficient vacuum to the end-user. In a second step, the counter magnet unit 28 is placed from the opposite side of the window 24 by touching first the window 24 with non-attracting distance away from window wiper unit 27. Then, the counter magnet unit 28 is radially pushed by the handle 17 towards the center of the vacuum pad 1, hosting the attracting permanent magnet 12. As a result, there is smooth, impulse free attraction happening between magnet 12 and 14, while the air bumper cavity 23 is getting slowly compressed to zero to gain full magnetic attraction. The mounting process is finished.

Removing of the window wiper unit 27 from window 24 is as follows:
In a first step, the counter magnet unit 28 is radially pulled away along the window by using its handle 17. As a result, the rubber bellow 16 relaxes by extending axially and refills the air bumper cavity 23. In a second step, the vacuum in the pad air cavity 32 should get broken by pulling on the vacuum opening 2 radially towards the center of the wiper housing 4. The window wiper unit 27 can be removed.

The rotational movement of the wiper arm 20 is depicted in FIG 1 with a wipe angle 31. According to the use case of a window wiper unit 27, this wipe angle range and start position - illustrated in FIG 1 - can be programmed via the control unit 103.

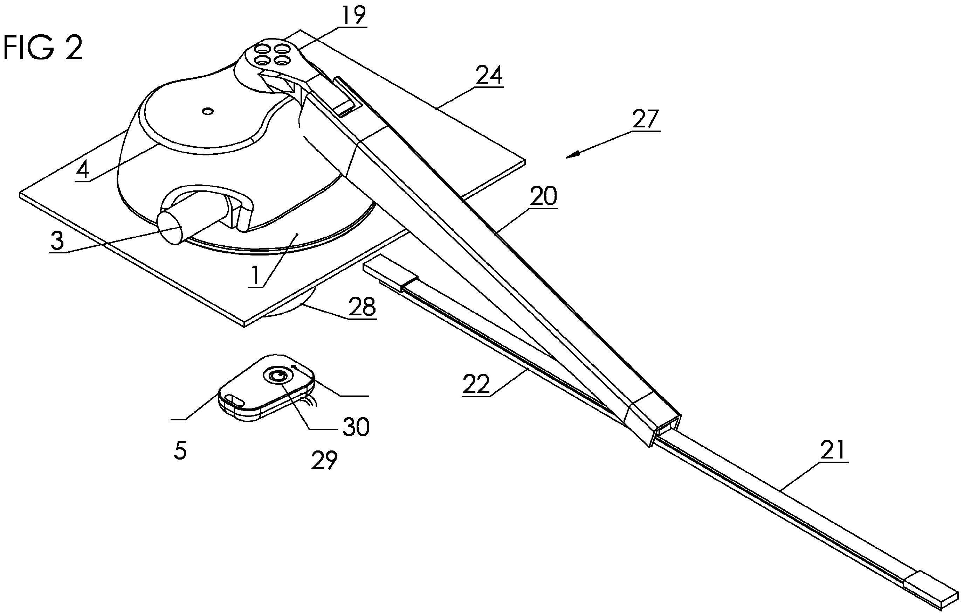

FIG 2 shows a 3D perspective view of the window wiper unit 27 with counter magnet unit 28, both placed in between an illustrative window 24. In addition, the remote transmitter 5 is shown with its push button 29, acting as switch on for the wipe system and its LED on the remote transmitter 30, acting as switch on visual confirmation. The transmitter 5 is internally equipped with a magnet (not shown in the drawings), allowing attachment to any magnetic surface. Constructional details of the wiper arm 20 and a wiper blade profile 21 fixing the wiper rubber blade 22, including a rotational joint (not shown in the drawings) between wiper arm 20 and a wiper blade profile 21, need no further explanations as state of the art. Similarly, the coupling 19 between the servo motor 7 and the wiper arm 20, hosting a spring (not shown) is also seen as state of the art. Depending on the wiper application, the wiper arm assembly, consisting of parts 20, 21, 22 can easily be exchanged by shorter or longer wiping arms.

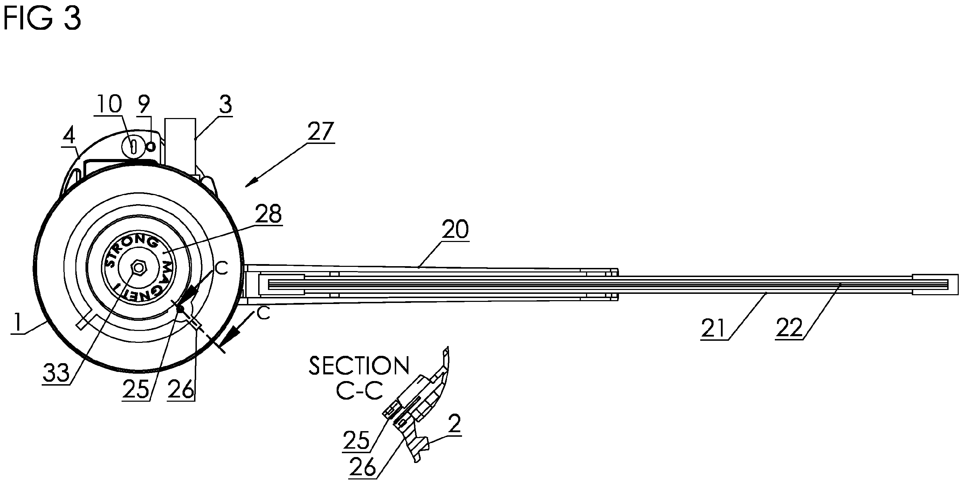

FIG 3 shows the bottom view of the window wiper unit 27 with counter magnet unit 28, while SECTION C-C shows details on the vacuum breaking mechanism. Next to the 5V USB-C charge port 10, a LED on window wiper unit 9 switches on while charging the battery cells 6. If the battery cells 6 appear fully charged, the LED 9 switches off for feedback.

SECTION C-C of FIG 3 shows the air venting hole 25, which leads to the vacuum pump 3. In addition, the vacuum release recess 26 in the lower side of the vacuum pad 1 helps to break the vacuum of pad vacuum cavity 32 by having close to the recess 26 a pulling vacuum opening handle 2. The counter magnet unit 28 is shown concentric to the vacuum pad 1, hosting the counter magnet 14 fixing nut 33.

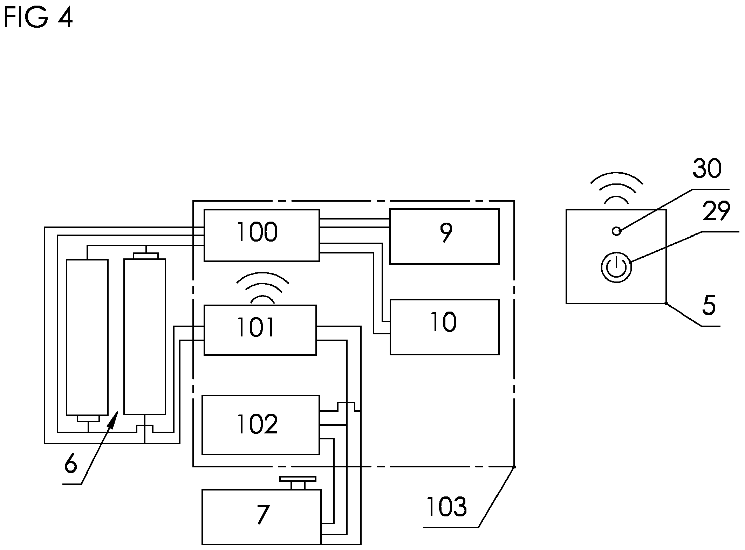

FIG 4 shows a block diagram, hosting the control unit 103, the battery cells 6, the servo motor 7 and the remote transmitter 5. For the meaning of a servo motor 7, reference is made to the source [4]. In short, the wiper related servo motor comes with a compact, highly geared motor, which can be controlled in its motion via a PWM signal. The control unit 103 is equipped with a battery management and charger 100, which allows to charge two serial connected battery cells 6 via the USB-C charge port 10 with 5V USB-C default voltage while being able to balance the two serial cells for individual cell over voltage protection. In addition, the LED on the window wiper unit 9 reflects the charging status of the battery cells 6 by being on while charging and off when fully charged.

The remote receiver 101 in FIG 4 gets its power directly from the battery cells 6 and comes with a low power mode by sleeping for 1-2 seconds with a scan for signal of approximately 15 µs. This allows a low enough sleep current for a practical waiting for signal period up to several months, powered fully on the internal battery cells 6.

A microcontroller 102 in FIG 4 comes with the ability to provide PWM signals for the servo motor 7 wipe angle 31 motions. The microcontroller 102 is programmed to custom wipe patterns with different pause and run periods. In addition, the programming allows to define the wipe range 31 and the start and stop position, for example, it is possible to position the window wiper arm 20 in line with the airflow for low power aerodynamic losses. Alternative, the wiper arm can be positioned out of eye vision, depending on application preferences. The microcontroller 102 is programmed via a USB-C programming interface. It has to be noted, that USB-C stands primarily only for a 24-pin connector, see source [5]. An interface specification for this programming interface is preferably in compliance with the specifications given in the source [6].

For completeness, FIG 4 illustrates the remote transmitter 5, equipped with a switch on push button 29 and switch on optical feedback giving LED. As mentioned before the remote transmitter 5 comes with an magnet (not shown in the drawings) to allow an attachment to any magnetic surface. Even with a single user interface of a push button various settings and operations for the windows wiper unit 24 can be executed by different time sequences of pressing the push button 29.

### List of reference signs

- 1: vacuum pad
- 2: vacuum opening
- 3: vacuum pump
- 4: wiper housing
- 5: remote transmitter
- 6: battery cells
- 7: servo motor
- 8: spring loaded pin
- 9: LED on window wiper unit
- 10: charge port
- 11: electronics compartment
- 12: permanent magnet
- 13: steel plate
- 14: counter-magnet
- 15: steel plate
- 16: rubber bellow
- 17: handle
- 18: screw and nut
- 19: coupling
- 20: wiper arm
- 21: wiper blade profile
- 22: wiper rubber blade
- 23: air bumper cavity
- 24: surface, window or body shell
- 25: venting hole
- 26: vacuum release recess
- 27: window wiper unit
- 28: counter magnet unit
- 29: push button
- 30: LED on the remote transmitter
- 31: wipe angle
- 32: pad vacuum cavity
- 33: nut
- 100: battery management and charger
- 101: remote receiver
- 102: microcontroller
- 103: control unit

### List of used acronyms

- PWM: Pulse Width Modulation
- USB-C: Universal Serial Bus, Type C
- SUV: Sports Utility Vehicles

### List of cited documents and sources

[1] GB 2 418 348 B
   «A road vehicle with emergency windscreen wiper apparatus»
[2] US 4,316,303
   «AUXILIARY WINDSHIELD AND WINDOW WIPER»
[3] EP 2 480 430 B1
   «VACUUM MOUNTED CARRIER FOR A VEHICLE»
[4] https://en.wikipedia.org/wiki/Servo (radio control)
[5] https://en.wikipedia.org/wiki/USB-C
[6] https://www.usb.org/documents

## Claims

1. A window wiper unit (27) comprising a wiper housing (4) containing
- a servo motor (7) for driving a wiper arm (20),
- a control unit (103) for controlling the servo motor (7),
- means for removably attaching the window wiper unit (27) to a surface (24),
**characterized in that**
the means for removably attaching the window wiper unit (27) comprise for a double securing
- a vacuum pad (1) being attached to the wiper housing (4),
- a vacuum pump (3) for providing a vacuum in a pad vacuum cavity (32) of the wiper housing (4) so that the wiper housing (4) is fixed to the surface (24)
and
- a permanent magnet (12) being fixed to the wiper housing (4) and on the other side of the surface (24) a counter-magnet (14) is provided, resulting in the permanent magnet (12) and the counter-magnet (14) getting attracted to each other towards the surface (24).

2. A window wiper unit (27) according to claim 1,
wherein
the control unit (103) comprises
- a battery (6) for power supply
and
- a microcontroller (102) for controlling the servo motor (7) .

3. A window wiper unit (27) according to claim 2,
wherein
the battery (6) is made up of two battery cells and being connected to a battery manager and charger (100).

4. A window wiper unit (27) according to one of the claims 2 or 3,
wherein
the control unit (103) comprises a LED (9) for indicating the status of charge of the battery (6) and a charge port (10) for a connection with an external power supply.

5. A window wiper unit (27) according to one of the claims 2 to 4,
wherein
the control unit (103) comprises
a remote receiver (101) being connectable with a remote transmitter (5) which comprises a push button (29) for controlling the servo motor (7).

6. A window wiper unit (27) according to claim 5,
wherein
the remote receiver (101) is operable intermittently for low power consumption and said remote receiver (101) activates the microcontroller (102) and the servomotor (7) by a trigger signal after receipt of a signal from the remote transmitter (5) .

7. A window wiper unit (27) according to one of the claims 1 to 6,
wherein
the counter magnet (14) is part of a counter magnet unit (28) where the counter magnet unit (28) further comprises
- a handle (17) fixed via a screw (18) with the counter magnet (14)
and
- a rubber bellow (16) which overhangs the permanent magnet (14) and thus forms an air bumper cavity (23) to the surface (24) .

8. A window wiper unit (27) according to one of the claims 1 to 7,
wherein
a steel plate (13) is arranged between the permanent magnet (12) and the servo motor (7) to increase the magnetic force and to provide a shield to prevent magnetic interferences towards the servo motor (7).

9. A window wiper unit (27) according to claim 7 or 8,
wherein
a steel plate (15) is arranged between the counter magnet (14) and the handle (17) to increase the magnetic force while reducing the magnetic field strength within the handle (17).

10. A window wiper unit (27) according to one of the claims 2 to 9,
wherein
the microcontroller (102) is programable for driving the servo motor (7) with a customizable wipe angle (31) or a start position or a wipe pattern.

11. A window wiper unit (27) according to claim 10,
wherein
the charge port (10) is designed as a USB-C interface.

12. A window wiper unit (27) according to claim 5 or 6, wherein
the remote transmitter (5) is equipped with a magnet, allowing an attachment to any attractive surface.
